# EUROPÄISCHE PATENTSCHRIFT

(11) **EP 0 903 097 B1**
(45) Veröffentlichungstag und Bekanntmachung des Hinweises auf die Patenterteilung: **20.11.2002**
(21) Anmeldenummer: 98117985.6
(22) Anmeldetag: 23.09.1998
(51) Int. Cl.: A47J 27/04

(54) **Verfahren zum Betreiben eines Haushaltgerätes zum drucklosen Dampfgaren**
Method of using a household apparatus for pressureless steam cooking
Procédé d'utilisation d'un appareil menager à cuire à vapeur sans pression

(30) Priorität: 23.09.1997 DE 19741880
(43) Veröffentlichungstag der Anmeldung: 24.03.1999
(73) Patentinhaber: Imperial-Werke oHG, 32257 Bünde (DE)
(72) Erfinder: Dittrich, Hartmut, Dr., 32257 Bünde (DE); Metz, Thomas, 32257 Bünde (DE); Niehaus, Detlef, 44269 Dortmund (DE)
(74) Vertreter: Neisen, Jürgen

(56) Entgegenhaltungen:
- EP-A- 0 383 327
- EP-A- 0 390 264
- EP-A- 0 664 097
- DE-A- 19 726 677
- US-A- 5 060 559

## Beschreibung

Die Erfindung betrifft ein Verfahren zum Betreiben eines Haushaltgerätes zum drucklosen Dampfgaren mit einem Dampferzeuger durch Steuerung der Dampfmenge mit Hilfe eines tatsächlich durch einen Temperaturfühler erfaßten Temperaturwertes T_{D} und Weitergabe dieses Wertes an eine Auswerteelektronik.

Es sind bereits unterschiedliche Haushaltgeräte zum drucklosen Dampfgaren von Lebensmitteln bekannt. In derartigen Vorrichtungen werden Dampftemperaturen von maximal 100 ° C erreicht. Dadurch sind sie für eine schonende Zubereitung von empfindlichen Lebensmitteln gut geeignet. Es sind jedoch vorwiegend Geräte zum drucklosen Dampfgaren bekannt, die als herkömmlicher Backofen mit mindestens einem trockenen Heizkörper ausgestattet sind und zusätzlich mit Dampfzufuhr garen. Der Nachteil solcher Backöfen zum Dampfgaren besteht darin, daß der Heizkörper immer direkt im oder unter dem Garraum angeordnet ist. Die zusätzlich von dem Heizkörper ausgehende Wärme beeinflußt den Garvorgang mit Dampf negativ.

Die DE 44 01 642 beschreibt eine Vorrichtung, bei der ein durch einen Deckel verschließbares Dampfgarbecken einen Füllraum zum Erhitzen von Wasser durch eine Heizeinrichtung beinhaltet. Oberhalb des Wasserspiegels wird ein Gargutträger zur Aufnahme des Gargutes eingebracht. Ein derartiges Dampfgarbecken weist an einer Wand eine Dampfauslaßöffnung zum Druckausgleich gegenüber dem Umgebungsdruck und einen Temperatursensor in der Dampfströmung außerhalb des Füllraumes zum Erhitzen von Wasser auf. Ein wesentlicher Nachteil einer solchen Dampfgarvorrichtung besteht insbesondere darin, daß die Heizeinrichtung und das Wasser sich direkt im Garraum befinden. Die Strahlungswärme der Heizeinrichtung und/oder des heißen Wassers beeinflussen auch hier die Temperatur, die durch den Temperaturfühler im Garraum sensiert wird.

Außerdem arbeitet jeder Temperaturfühler mit Toleranzen, in denen die gemessenen Werte von der tatsächlichen Dampftemperatur abweichen können. Werden diese gemessenen Werte an eine Auswerteelektronik weitergegeben, kommen hierzu noch die Toleranzen der übrigen Bauteile. Beim drucklosen Dampfgaren ist es jedoch besonders wichtig, daß die Abweichung der gemessenen Temperatur von der tatsächlichen Temperatur gering ist. Wird eine gemessene Temperatur zu hoch angezeigt, so hat das eine niedrigere tatsächliche Dampftemperatur zur Folge. Ist die Dampftemperatur aber zu niedrig, so wirkt sich dieses negativ auf die Garzeiten und damit auf das Garergebnis aus. Im umgekehrten Fall, bei einer zu niedrig angezeigten Temperatur, hat das zur Folge, daß die tatsächliche Temperatur immer am Maximum der mit drucklosem Dampf erzielbaren Temperatur liegt. Da die Solltemperatur hierbei nie erreicht werden würde, schaltet der Dampferzeuger auch nicht ab. Die Folge wären jedoch unnötig erhöhte Energie- und Wasserverbrauchswerte. Bekannte drucklose Dampfgargeräte berücksichtigen außerdem nicht die Abhängigkeit der maximal erreichbaren Temperatur von der Höhenlage des Ortes, an dem sie betrieben werden. Beim Endnutzer erfolgt immer nur ein Anschluß an eine elektrische Leitung und eventuell an eine Wasserleitung. Es erfolgt vor Ort keine exakte Anpassung an die Umgebungsbedingungen. Dadurch ist nicht gewährleistet, daß ein nur während der Fertigung abgeglichenes Gerät am Einsatzort bei optimaler Temperatur arbeiten kann. Damit läßt sich natürlich auch kein optimaler Energieverbrauch erreichen. Ein wesentlicher Nachteil der bekannten Verfahren zum Betreiben eines Haushaltgerätes zum drucklosen Dampfgaren besteht also darin, daß das Haushaltgerät nicht immer zuverlässig am optimalen Arbeitspunkt betrieben wird.

Der Erfindung stellt sich somit das Problem, ein Verfahren zum Betreiben eines Haushaltgerätes zum drucklosen Dampfgaren zu schaffen, welches unabhängig von der Höhenlage des Einsatzortes und den Toleranzen des Temperaturfühlers und der Bauteile einen optimalen Arbeitspunkt ermittelt und immer eine gleichbleibende Gartemperatur garantiert.

Erfindungsgemäß wird dieses Problem durch ein Verfahren zum Betreiben eines drucklosen Dampfgarers mit den im Patentanspruch 1 angegebenen Merkmalen gelöst. Vorteilhafte Ausgestaltungen und Weiterbildungen der Erfindung ergeben sich aus den nachfolgenden Unteransprüchen.

Die mit der Erfindung erreichbaren Vorteile bestehen insbesondere darin, daß an jedem neuen Einsatzort des Haushaltgerätes ein automatischer Abgleich des Temperaturfühlers und aller toleranzbehafteten Bauteile durchführbar ist und auch durchgeführt wird. Das Verfahren hat den besonderen Vorteil, daß sämtliche Toleranzen des Temperaturfühlers und der Bauteile der Auswerteelektronik aufgehoben werden. Weiterhin wird auch der Aufstellungsort des Dampfgargerätes berücksichtigt, da sich die Siedetemperatur des Wassers mit der Höhenlage über Null verändert. Außerdem ist der Abgleichvorgang jederzeit beliebig oder regelmäßig wiederholbar. Das Gerät läßt sich nach so einem automatischen Abgleich immer am optimalen Arbeitspunkt betreiben. Bei dem automatischen Abgleich erfolgt eine Begrenzung des Temperaturwertes T_{D} auf einen maximal einstellbaren Temperaturwert T_{Dmax}. Dazu wird Wasser mit einer im Garraum vorhandenen, definierten Gargutmenge so lange erhitzt und verdampft bis die Gartemperatur erreicht ist. Der Temperaturwert T_{Dmax} ist dabei durch eine, insbesondere bei leerem Garraum, nicht weiter ansteigende Temperatur des Dampfes definiert. Die Steuerung eines Garverfahrens erfolgt nach einem automatischen Abgleich mit Hilfe des bei dem Abgleich durch den Temperaturfühler erfaßten Temperaturwertes T_{Dmax}. Der aktuell gemessene Wert T_{D} wird an die Auswerteelektronik des Gerätes weitergegeben, wo ein Vergleich mit dem dort bereits vorhandenen Vergleichswert erfolgt, der maximal T_{Dmax} betragen kann.

Eine vorteilhafte Ausgestaltung des Verfahrens sieht vor, daß zum automatischen Abgleich die definierte Menge Gargut gleich Null ist, d.h., es befindet sich kein Gargut im Garraum. Ohne Gargut ist der Abgleich am schnellsten durchzuführen. Außerdem ist es vorteilhaft, wenn in der Auswerteelektronik ein Bezugswert für nachfolgende Garprogramme abgelegt wird, der unterhalb des Temperaturwertes T_{Dmax} liegt. Dieser niedrigere Wert gewährleistet in besonderer Weise, daß eine Unterbrechung der Dampfzufuhr spätestens beim Erreichen des Temperaturwertes T_{Dmax} vorgenommen wird.

Eine besonders vorteilhafte Ausgestaltung des Verfahrens sieht eine regelmäßige Durchführung des Abgleichs des Temperaturfühlers und aller toleranzbehafteter Bauteile bei jedem Garvorgang in einem regelmäßig wiederkehrenden Verfahrensschritt oder nach einer bestimmten Betriebszeit vor. Dadurch ist insbesondere ein Einsatz von kostengünstigen Bauteilen mit größeren Toleranzbereichen möglich. Da sich beim automatischen Abgleich vorzugsweise kein Gargut im Garraum befinden sollte, eignet sich der Reinigungsvorgang am besten für den automatischen Abgleich. Der dabei ermittelte Temperaturwert T_{Dmax} bzw. ein darunter liegender Wert ist für die Steuerung des Garverfahrens anschließend aus der Auswerteelektronik abrufbar. Außerdem ist von Vorteil, wenn nach Ablauf einer vom Hersteller vorgegebenen Betriebszeit des Haushaltgerätes der automatische Abgleich erneut vorgenommen wird. Dann kann als regelmäßig wiederkehrender Vorgang, welcher für einen Abgleich des Temperaturfühlers besonders geeignet ist, auch der Reinigungs- und/oder der Entkalkungsvorgang genutzt werden. Besonders vorteilhaft ist es, wenn die Durchführung des automatischen Abgleichs selbständig vom Haushaltgerät eingeleitet wird. Ebenso kann dieser Abgleich aber auch vom Benutzer selbst eingeleitet werden. Ein wesentlicher Vorteil ist außerdem ein vom Hersteller eingerichteter Schutz des Gerätes, der nach einer vorgegebenen Betriebszeit alle Gar-Programmarten sperrt und nur noch die Betriebsart Entkalken zuläßt. Bei dieser regelmäßig durchzuführenden Entkalkung des Dampfgargerätes kann dann gleichzeitig auch der Abgleich regelmäßig und automatisch durchgeführt werden.

Ein weiterer Vorteil ist darin zu sehen, daß durch eine Begrenzung des Temperaturwertes T_{D} auf einen Temperaturwert T_{Dmax} ein Garen immer mit einer optimalen Dampfmenge erfolgt und damit kein Verfärben des Gargutes im Gärraum auftreten kann. Beim drucklosen Garen mit Dampf befindet sich kein Luftsauerstoff mehr im Garraum, wodurch beispielsweise ein Entfärben von Gemüse durch Sauerstoff entfällt.

Ein Ausführungsbeispiel der Erfindung wird nachfolgend näher beschrieben:

Das Verfahren zum Betreiben eines Haushaltgerätes zum drucklosen Dampfgaren erfolgt in einem Haushaltgerät mit einem Dampferzeuger durch Steuerung der zugeführten Dampfmenge. Das Haushaltgerät zum drucklosen Dampfgaren besteht insbesondere aus einem Garraum, einem Dampferzeuger, der mit einem Wasserbehälter verbunden ist, einer Auswerteelektronik und einer Bedienblende mit Einstellelementen für Programme bzw. Betriebsarten. Zum optimalen Arbeiten mit dem drucklosen Dampfgargerät muß die Abhängigkeit der maximal erreichbaren Temperatur von der Höhenlage des Ortes Beachtung finden, an dem das Haushaltgerät betrieben wird. Mit Hilfe eines durch einen Temperaturfühler im Garraum tatsächlich erfaßten Dampftemperaturwertes T_{Dmax} und Weitergabe dieses Wertes T_{Dmax} an eine Auswerteelektronik wird die Steuerung der in den Garraum einzuleitenden Dampfmenge vorgenommen. Der maximal einstellbare Temperaturwert T_{Dmax} ist dabei als eine nicht mehr ansteigende Dampftemperatur T_{D} definiert. Dieser Temperaturwert T_{Dmax} oder besser noch ein Wert mit einer Toleranz unterhalb von T_{Dmax} wird in der Auswerteelektronik abgespeichert und für die Regelung jedes nachfolgenden Garvorganges als Bezugswert abrufbar. Ein solcher Vorgang wird als automatischer Abgleich bezeichnet. Um auch einen wirklich aussagekräftigen Temperaturwert T_{Dmax} zu erhalten, sollten während des Dampfgarens keine zusätzlichen Heizkörper die Gartemperatur beeinflussen.

Ein automatischer Abgleich gewährleistet ein optimales Betreiben des Haushaltgerätes an allen Einsatzorten, auch in geographisch höher gelegenen Gebieten. Denn mit steigenden Höhen über NN des Wasserspiegels ändert sich die Siedetemperatur des Wassers z.T. erheblich. Ein automatischer Abgleich des Temperaturfühlers und aller toleranzbehafteter Bauteile wird nicht nur bei der Fertigung, sondern direkt vor Ort vorgenommen, z.B. während eines Garvorganges. Ein Abgleich der Temperatur wird vorzugsweise im leeren Garraum durchgeführt, weil der maximal erreichbare Endwert so am schnellsten erreichbar ist. Bei einer anderen Beladung oder bei definierter Last dauert der Vorgang entsprechend länger. Außerdem müßte die definierte Menge Gargut eingehalten werden, um Vergleichswerte zu schaffen. Jedem Druck ist eine Temperatur zugeordnet, so daß aus einem maximal möglichen Dampfdruck (entspricht hierbei dem Umgebungsdruck) eine maximal mögliche Temperatur resultiert. Daraus resultiert, daß bei einem drucklos betriebenen Haushaltgerät die Temperatur T_{D} abhängig vom Umgebungsdruck ist.

Das Gargut, welches in den Garraum eingebracht wird, heizt sich durch das Kondensieren des Dampfes auf seiner Oberfläche auf. Von der Oberfläche erfolgt eine Wärmeleitung in das Innere des Gargutes. Ohne Abgleich würde bei einem Einstellen bzw. Vorhandensein einer zu niedrigen Temperatur T_{D} ein Luftgemisch im Garraum verbleiben und der Partialdruck des Dampfes wäre geringer als der Umgebungsdruck. Außerdem kann das Gargut an der Oberfläche keine höhere Temperatur erhalten, als es dem Taupunkt im Garraum entspricht, so daß unter diesen Bedingungen ein Verfärben des Gargutes nicht immer vermieden wird.

Durch einen automatisch durchgeführten Abgleich wird spätestens beim Erreichen des Temperaturwertes T_{Dmax} die Energiezufuhr gedrosselt, um nicht unnötig zuviel elektrische Energie zu verbrauchen, welche zum überflüssigem Verdampfen von Wasser notwendig sein würde. Da ein Dampfgar-Haushaltgerät insbesondere als ein Einbaugerät gut zu handhaben ist, sollte außerdem so wenig wie möglich Dampf produziert werden, um insbesondere die Möbel In der Umgebung und die Bedienblende zu schonen. Der beim Abgleich ermittelte Temperaturwert T_{Dmax} oder ein Wert, der darunter liegt, ist Ausgangswert für alle nach jedem Abgleich durchgeführten Garverfahren.

Der automatische Abgleich sollte, wenn auch nicht unbedingt bei jedem Betrieb, so doch in regelmäßigen Abständen wiederholt werden, um die Toleranzen der Bauelemente immer wieder zu eliminieren. Hierzu bietet sich beispielsweise ein Betriebsstundenzähler an, der ein Signal in irgendeiner Art und Weise gibt, wenn wieder ein Abgleich erfolgen sollte. Sollte das Signal vom Benutzer des Gerätes jedoch unbeachtet bleiben und der empfohlene Abgleich erfolgt nicht, wird ein als Überhitzungsschutz bezeichneter Sicherheitsschutz aktiv. Es wird dann ein Fehler des Gerätes signalisiert und kein weiterer Garbetrieb zugelassen. Es kann nur noch ein gesondertes Abgleichprogramm bzw. die Betriebsart Entkalken gestartet werden. In Abständen sollte neben einer unbedingt durchzuführenden Reinigung des Dampferzeugers von Rückständen im Wasser (z.B. Kalkablagerungen) eben auch ein automatischer Abgleich vorgenommen werden. Die Betriebsart Entkalken eignet sich deshalb ideal zur Durchführung des automatischen Abgleichs, da auch hierbei kein Gargut im Garraum vorhanden ist.

## Patentansprüche

1. Verfahren zum Betreiben eines Haushaltgerätes zum drucklosen Dampfgaren mit einem Dampferzeuger durch Steuerung der Dampfmenge mit Hilfe eines durch einen Temperaturfühler erfaßten Temperaturwertes T_{D} und Weitergabe dieses Wertes an eine Auswerteelektronik,
**dadurch gekennzeichnet,**
**daß** am Einsatzort des Haushaltgerätes mindestens einmal ein automatischer Abgleich des Temperaturfühlers und aller toleranzbehafteten Bauteile bei einer definierten Menge Gargut im Garraum vorgenommen wird,
wobei im Dampferzeuger Wasser so lange erhitzt wird, bis der im Garraum nicht weiter ansteigende Temperaturwert T_{D} als Temperaturwert T_{Dmax} erfaßt, in der Auswerteelektronik abgespeichert und zur Steuerung nachfolgender Garvorgänge herangezogen wird.

2. Verfahren nach Anspruch 1,
**dadurch gekennzeichnet,**
**daß** beim automatischen Abgleich kein Gargut im Garraum vorhanden ist und
**daß** in der Auswerteelektronik ein Temperaturwert als Bezugswert abgespeichert wird, der unterhalb des Temperaturwertes T_{Dmax} liegt.

3. Verfahren nach mindestens einem der Ansprüche 1 oder 2,
**dadurch gekennzeichnet,**
**daß** bei jedem Garvorgang spätestens beim Erreichen des Temperaturwertes T_{Dmax} eine Unterbrechung der Dampfzufuhr vorgenommen wird.

4. Verfahren nach mindestens einem der Ansprüche 1 bis 3,
**dadurch gekennzeichnet,**
**daß** der automatische Abgleich während eines regelmäßig wiederkehrenden Programmschrittes vorgenommen wird.

5. Verfahren nach mindestens einem der Ansprüche 1 bis 4,
**dadurch gekennzeichnet,**
**daß** der automatische Abgleich während eines Reinigungsvorganges vorgenommen wird.

6. Verfahren nach mindestens einem der Ansprüche 1 bis 5,
**dadurch gekennzeichnet,**
**daß** der automatische Abgleich nach vorbestimmbaren Betriebszeiten des Haushaltgerätes vorgenommen wird.

7. Verfahren nach mindestens einem der Ansprüche 1 bis 6,
**dadurch gekennzeichnet,**
**daß** das Haushaltgerät eine Durchführung des automatischen Abgleichs selbständig einleitet.

8. Verfahren nach mindestens einem der Ansprüche 1 bis 7,
**dadurch gekennzeichnet,**
**daß** eine Durchführung des automatischen Abgleichs vom Benutzer eingeleitet wird.

9. Verfahren nach mindestens einem der Ansprüche 1 bis 8,
**dadurch gekennzeichnet,**
**daß** die Auswerteelektronik einen Betriebsstundenzähler aufweist, der nach einer vorgebbaren Betriebsstundenzahl jeden Garbetrieb des Haushaltgerätes sperrt und nur eine Betriebsart Entkalken zuläßt.

10. Verfahren nach mindestens einem der Ansprüche 1 bis 9,
**dadurch gekennzeichnet,**
**daß** ein Überhitzungsschutz aktiviert wird und dieser das Gerät außer Betrieb setzt, wenn der automatische Abgleich nicht spätestens nach bestimmbarer Betriebszeit vorgenommen wurde.

## Claims

1. Method of operating a domestic appliance for pressureless steam-cooking with a steam generator, by controlling the quantity of steam by means of a temperature value T_{D}, which is detected by a temperature gauge, and by transmitting this value to an electronic evaluation system, **characterised in that** an automatic adjustment of the temperature gauge and all of the tolerance-associated component parts is effected at least once at the place of use of the domestic appliance, with a specific quantity of food in the cooking area, water being heated in the steam generator for so long until the temperature value T_{D}, which does not increase further in the cooking area, is detected as the temperature value T_{Dmax}, and said value being stored in the electronic evaluation system and being used to control subsequent cooking processes.

2. Method according to claim 1, **characterised in that**, during the automatic adjustment process, there is no food in the cooking area, and **in that** a temperature value is stored in the electronic evaluation system as the reference value which lies below the temperature value T_{Dmax}.

3. Method according to at least one of claims 1 or 2, **characterised in that** the supply of steam is interrupted during each cooking process at the latest when the temperature value T_{Dmax} is reached.

4. Method according to at least one of claims 1 to 3, **characterised in that** the automatic adjustment is effected during a regularly recurrent program step.

5. Method according to at least one of claims 1 to 4, **characterised in that** the automatic adjustment is effected during a cleaning operation.

6. Method according to at least one of claims I to 5, **characterised in that** the automatic adjustment is effected after predeterminable operational periods of the domestic appliance.

7. Method according to at least one of claims 1 to 6, **characterised in that** the domestic appliance automatically introduces an accomplishment of the automatic adjustment.

8. Method according to at least one of claims 1 to 7, **characterised in that** the user introduces an accomplishment of the automatic adjustment.

9. Method according to at least one of claims 1 to 8, **characterised in that** the electronic evaluation system has a means for counting operating hours, which means blocks any cooking operation of the domestic appliance after a prescribable number of operating hours and permits only one type of operation, decalcification.

10. Method according to at least one of claims 1 to 9, **characterised in that** a means for preventing overheating is activated, and the latter makes the appliance inoperative when the automatic adjustment has not been effected at the latest after a predeterminable operational period.

## Revendications

1. Procédé d'utilisation d'un appareil ménager de cuisson à la vapeur sans pression avec un générateur de vapeur par commande de la quantité de vapeur sur la base d'une valeur de température T_{D} détectée par une sonde de température et par retransmission de cette valeur à un dispositif d'évaluation électronique, **caractérisé en ce qu'**il est opéré sur le lieu d'utilisation de l'appareil ménager au moins une fois un équilibrage automatique de la sonde de température et de l'ensemble des composants sensibles aux tolérances pour une quantité spécifiée d'aliments à cuire dans le compartiment de cuisson des aliments, de l'eau étant chauffée dans le générateur de vapeur jusqu'à ce que la valeur de température T_{D} cessant de progresser dans le compartiment de cuisson des aliments soit détectée comme valeur de température T_{Dmax} enregistrée dans le dispositif d'évaluation électronique et réutilisée pour la commande des opérations de cuisson ultérieures.

2. Procédé selon la revendication 1, **caractérisé en ce qu'**aucun aliment à cuire n'est présent dans le compartiment de cuisson des aliments lors de l'équilibrage automatique et **en ce qu'**une valeur de température est enregistrée comme valeur de référence dans le dispositif d'évaluation électronique, qui est inférieure à la valeur de température T_{Dmax}.

3. Procédé selon au moins l'une des revendications 1 ou 2, **caractérisé en ce qu'**une interruption de l'apport de vapeur est générée dans chaque opération de cuisson, au plus tard lorsqu'est atteinte la valeur de température T_{Dmax}.

4. Procédé selon au moins l'une des revendications 1 à 3, **caractérisé en ce que** l'équilibrage automatique est effectué au cours d'une étape de programme régulièrement réactivée.

5. Procédé selon au moins l'une des revendications 1 à 4, **caractérisé en ce que** l'équilibrage automatique est effectué au cours d'une opération de nettoyage.

6. Procédé selon au moins l'une des revendications 1 à 5, **caractérisé en ce que** l'équilibrage automatique est effectué après des durées de fonctionnement prédéfinissables de l'appareil ménager.

7. Procédé selon au moins l'une des revendications 1 à 6, **caractérisé en ce que** l'appareil ménager lance de lui-même l'exécution de l'équilibrage automatique.

8. Procédé selon au moins l'une des revendications 1 à 7, **caractérisé en ce que** l'exécution de l'équilibrage automatique est lancée par l'utilisateur.

9. Procédé selon au moins l'une des revendications I à 8, **caractérisé en ce que** le dispositif d'évaluation électronique comporte un compteur d'heures de fonctionnement qui, après un nombre d'heures de fonctionnement pouvant être déterminé à l'avance, bloque toute activité de cuisson de l'appareil ménager et n'autorise qu'un mode de fonctionnement détartrage.

10. Procédé selon au moins l'une des revendications 1 à 9, **caractérisé en ce qu'**une protection anti-surchauffe est activée, qui met l'appareil hors de fonctionnement lorsque l'équilibrage automatique n'a pas été effectué au plus tard après une durée de fonctionnement définissable.
